# EUROPEAN PATENT APPLICATION

(11) **EP 3 889 750 A1**
(43) Date of publication of application: **06.10.2021**
(21) Application number: 20193123.5
(22) Date of filing: 27.08.2020
(51) Int. Cl.: G06F 3/0488, G06F 3/0481, G06F 3/01, G06F 3/0484, G06T 13/60, G06T 19/20

(54) **METHOD, APPARATUS AND STORAGE MEDIUM FOR DISPLAYING WEATHER ELEMENTS**

(30) Priority: 31.03.2020 CN 202010241502
(71) Applicant: Beijing Xiaomi Mobile Software Co., Ltd., Beijing 100085 (CN)
(72) Inventor: LI, Jiayan, Beijing, Beijing 100085 (CN); LIU, Jiawei, Beijing, Beijing 100085 (CN)
(74) Representative: dompatent von Kreisler Selting Werner - Partnerschaft von Patent- und Rechtsanwälten mbB

(57) **Abstract**

A method for displaying weather elements includes: acquiring a touch operation performed by a user on a display interface of the weather application; and controlling a weather element displayed on the weather application display interface to dynamically change in response to obtaining the touch operation. Therefore, the dynamic change of the weather element, on the weather application display interface, based on the user's operation is realized, and interactive feedback is realized.

## Description

### BACKGROUND

In the related technologies, terminals such as smartphones are installed with weather applications that display weather information of different cities at different times to allow users to query the weather information. The weather application can display weather elements such as rain, snow, and clouds in the display interface according to real-time weather status information.

### SUMMARY

The present disclosure generally relates to the field of the terminal displaying, and more specifically, to a method, apparatus, and a storage medium for displaying weather elements.

According to a first aspect of embodiments of the present disclosure, there is provided a method for displaying weather elements, which is applied to a terminal on which a weather application is installed, and the method includes:
acquiring a touch operation performed by a user on a display interface of the weather application; and controlling a weather element displayed on the weather application display interface to dynamically change in response to obtaining the touch operation.

Preferably, the controlling weather elements displayed on the weather application display interface to dynamically change includes:

determining a current weather element displayed on the weather application display interface and a current display state, and determining the obtained current touch operation; determining a weather element change rule that matches the current weather element and the current touch operation based on a correspondence among the weather element, the touch operation, and the weather element change rule; and controlling the current display state of the current weather element to dynamically change in accordance with the weather element change rule.

Preferably, the current weather element includes a cloud element, and the current display state of the cloud element includes a cyclic displacement motion within a specified area of a three-dimensional space and an animation change inside the cloud element; the current touch operation includes a first gesture operation; and the weather element change rule includes changing a movement speed of the cloud element and/or rotating a viewing angle of the cloud element.

The controlling the current display state of the current weather element to dynamically change in accordance with the weather element change rule includes: controlling the movement speed of the cloud element to slow down or speed up, and based on the first gesture operation, controlling the overall coordinates of the cloud element to rotate an angle in a three-dimensional space to match the first gesture operation

Preferably, the current weather element includes a snow element, and the current display state of the snow element includes moving in a vertical direction in a random area of the three-dimensional space and shifting in the direction of a random wind speed; the current touch operation includes a second gesture operation; and the weather element change rule includes changing a movement speed of the snow element and rotating a viewing angle of the snow element.

The controlling the current display state of the current weather element to dynamically change in accordance with the weather element change rule includes: controlling the movement speed of the snow element to slow down, and controlling the overall coordinates of the snow element to rotate an angle in a three-dimensional space to match the second gesture operation, on the weather application display interface.

Preferably, the current weather element includes a rain element, and the current display state of the rain element includes moving in a specified direction in a random area of a three-dimensional space and generating a direction deviation with a random wind speed, the specified direction is a direction with a certain inclination angle from the horizontal axis direction of the terminal, and the movement speed in the specified direction is determined based on the amount of the rainfall; the current touch operation includes a third gesture operation; and the weather element change rule includes changing a movement speed of the rain element and the display form of the rain element, and rotating a viewing angle of the rain element.

The controlling the current display state of the current weather element to dynamically change in accordance with the weather element change rule includes: controlling the movement speed of the rain element displayed in the form of rain filaments to slow down, changing the display form of the rain element to a raindrop shape when the movement speed of the rain element falls within a specified threshold range, and controlling the global coordinates of the rain element to rotate an angle in a three-dimensional space to match the third gesture operation, on the weather application display interface.

Preferably, when the current weather element displayed on the weather application display interface includes a thunder element, a sound component of the terminal is called to play a sound effect, and/or a vibration component of the terminal is called to vibrate.

Preferably, the current weather element includes a sunlight element, and the current display state of the sunlight element includes displaying the sunlight element at a specified position in a three-dimensional space with a specified light intensity, and the current touch operation includes a fourth gesture operation; and the weather element change rule includes changing a display position and display intensity of the sunlight element.

The controlling the current display state of the current weather element to dynamically change in accordance with the weather element change rule includes: displaying the sunlight element and controlling the display position and display intensity of the sunlight element to dynamically change in response to obtaining the fourth gesture operation on the weather application display interface.

Preferably, when a display position of the sunlight element overlaps with display positions of other interface elements other than the sunlight element, the sunlight element is displayed in the form of reflective refraction at the display position.

Preferably, the method for displaying weather elements related to the present disclosure further includes:
acquiring current weather data, and determining a weather element that matches the current weather data and needs to be displayed on the weather application display interface based on the current weather data; and displaying a first weather element and/or hiding a second weather element on the display interface of the weather application, the first weather element being a weather element that is not displayed on the display interface of the weather application but exists in the weather elements that need to be displayed, the second weather element being a weather element that has been displayed on the display interface of the weather application but does not exist in the weather elements that need to be displayed.

Preferably, the displaying a first weather element and/or hiding a second weather element on the display interface of the weather application includes:

displaying a first weather element and/or hiding a second weather element on the display interface of the weather application by adjusting a distance between a camera and the weather element in the three-dimensional space.

According to a second aspect of embodiments of the present disclosure, there is provided an apparatus for displaying weather elements, which is applied to a terminal on which a weather application is installed, and the apparatus includes: an acquisition unit configured to acquire a touch operation performed by a user on a display interface of the weather application; and a control unit configured to control a weather element displayed on the weather application display interface to dynamically change in response to obtaining the touch operation.

Preferably, the control unit controls the weather elements displayed on the weather application display interface to dynamically change in the following manner:
determining a current weather element displayed on the weather application display interface and a current display state, and determining the obtained current touch operation; determining a weather element change rule that matches the current weather element and the current touch operation based on a correspondence among the weather element, the touch operation, and the weather element change rule; and controlling the current display state of the current weather element to dynamically change in accordance with the weather element change rule.

Preferably, the current weather element includes a cloud element, and the current display state of the cloud element includes a cyclic displacement movement within a specified area of the three-dimensional space and an animation change inside the cloud element; the current touch operation includes a first gesture operation; and the weather element change rule includes changing a movement speed of the cloud element and/or rotating a viewing angle of the cloud element; and the control unit controls the current display state of the current weather element to dynamically change in accordance with the weather element change rule in the following manner: controlling the movement speed of the cloud element to slow down or speed up, and controlling global coordinates of the cloud element to rotate an angle in the three-dimensional space to match the first gesture operation based on the first gesture operation, on the weather application display interface.

Preferably, the current weather element includes a snow element, and the current display state of the snow element includes moving in a vertical direction in a random area of a three-dimensional space and generating a direction deviation with a random wind speed. The current touch operation includes a second gesture operation; and the weather element change rule includes changing a movement speed of the snow element and rotating a viewing angle of the snow element. The control unit controls the current display state of the current weather element to dynamically change in accordance with the weather element change rule in the following manner: controlling the movement speed of the snow element to slow down, and controlling global coordinates of the snow element to rotate an angle in a three-dimensional space to match the second gesture operation, on the weather application display interface.

Preferably, the current weather element includes a rain element, and the current display state of the rain element includes moving in a specified direction in a random area of a three-dimensional space and generating a direction deviation with a random wind speed. The specified direction is a direction with a certain inclination angle from the horizontal axis direction of the terminal, and the movement speed in the specified direction is determined based on the amount of rainfall. The current touch operation includes a third gesture operation; and the weather element change rule includes changing a movement speed of the rain element and the display form of the rain element, and rotating a viewing angle of the rain element. The control unit controls the current display state of the current weather element to dynamically change in accordance with the weather element change rule in the following manner: controlling the movement speed of the rain element displayed in the form of rain filaments to slow down, changing the display form of the rain element to a raindrop shape when the movement speed of the rain element falls within a specified threshold range, and controlling global coordinates of the rain element to rotate an angle in the three-dimensional space to match the third gesture operation, on the weather application display interface.

Preferably, the control unit is further configured to: call a sound component of the terminal to play a sound effect and/or call a vibration component of the terminal to vibrate when a current weather element displayed on the weather application display interface includes a thunder element.

Preferably, the current weather element includes a sunlight element, and the current display state of the sunlight element includes displaying the sunlight element at a specified position in a three-dimensional space with a specified light intensity, and the current touch operation includes a fourth gesture operation. The weather element change rule includes changing a display position and display intensity of the sunlight element; and the control unit controls the current display state of the current weather element to dynamically change in accordance with the weather element change rule in the following manner: displaying the sunlight element and controlling the display position and display intensity of the sunlight element to dynamically change in response to obtaining the fourth gesture operation on the weather application display interface.

Preferably, the control unit is further configured to: display the sunlight element in the form of reflective refraction at a display position when the display position of the sunlight element overlaps with display positions of other interface elements other than the sunlight element.

Preferably, the apparatus further includes an acquisition unit, while the acquisition unit is configured to acquire current weather data, and determine a weather element that matches the current weather data and needs to be displayed on the weather application display interface based on the current weather data. The control unit is further configured to display a first weather element and/or hide a second weather element on the display interface of the weather application, with the first weather element being a weather element that is not displayed on the display interface of the weather application but exists in the weather elements that need to be displayed, and the second weather element being a weather element that has been displayed on the display interface of the weather application but does not exist in the weather elements that need to be displayed.

Preferably, the control unit displays a first weather element and/or hides a second weather element on the display interface of the weather application in the following manner: displaying a first weather element and/or hiding a second weather element on the display interface of the weather application by adjusting a distance between a camera and the weather element in a three-dimensional space.

According to a third aspect of embodiments of the present disclosure, there is provided a device for displaying weather elements, comprising:
a processor; and a storage for storing instructions executable by the processor;
wherein the processor is configured to: execute the method for displaying weather elements according to the first aspect or any one of embodiments of the first aspect.

According to a fourth aspect of embodiments of the present disclosure, there is provided a non-transitory computer-readable storage medium, wherein when instructions in the storage medium are executed by a processor of a mobile terminal, the mobile terminal is enabled to execute the method for displaying weather elements according to the first aspect or any one of embodiments of the first aspect.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this disclosure, illustrate embodiments consistent with the present disclosure and, together with the description, serve to explain the principles of the present disclosure.
FIG. 1 shows a schematic flowchart illustrating a method for displaying weather elements according to some embodiments of the present disclosure.
FIG. 2 shows an implementation flowchart for controlling a weather element displayed on the weather application display interface to dynamically change according to some embodiments of the present disclosure.
FIG. 3 is a block diagram illustrating an apparatus for displaying weather elements according to some embodiments.
FIG. 4 is a block diagram illustrating an apparatus for displaying weather elements according to some embodiments.

### DETAILED DESCRIPTION

Description will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

In the related technologies, a three-dimensional interactive interface is widely used in various fields of mobile interaction, and displaying interactive animation in the three-dimensional user interface of the terminal has gradually become the first choice of developers. However, in existing weather applications, the display method of weather elements has a single form and dynamic effects are insufficient, and the interactive animation has not been used in any application case to display weather elements in a three-dimensional interactive interface of the terminal.

In view of this, some embodiments of the present disclosure provide a method for displaying weather elements, which controls the weather elements to dynamically change on the display interface of the weather application based on the user's touch operations to realize the use of interactive animation to display the weather elements in a three-dimensional user interface of the terminal, and realize the interactivity and diversity of the weather elements displayed on the weather application display interface.

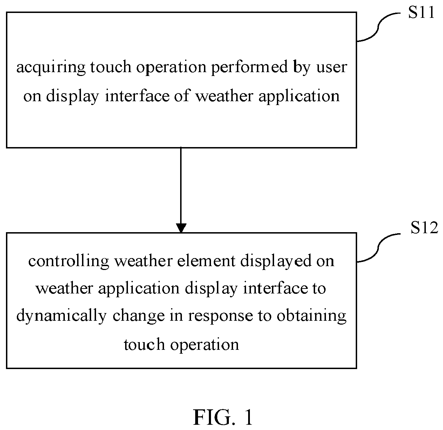

FIG. 1 shows a schematic flowchart illustrating a method for displaying weather elements according to some embodiments of the present disclosure. As shown in FIG. 1, the method for displaying weather elements is applied in the terminal, and includes the following steps.

In step S11, a touch operation performed by the user on the display interface of the weather application is acquired.

Preferably weather application (APP) is installed on the terminal. The display interface that can display the weather application on the terminal is operated through launching the weather application by the user. The display interface displaying the weather application on the terminal can also be understood as the display interface of the weather application being activated by the user. When the terminal obtains that the display interface of the weather application has been activated by the user, it acquires a touch operation performed by the user on the display interface of the weather application.

Preferably, the touch operation performed by the user on the display interface of the weather application can include, but is not limited to, a touch operation such as clicking, sliding the screen, long-pressing, and the like.

In step S12, the weather element displayed on the weather application display interface is controlled to dynamically change in response to obtaining the touch operation.

Preferably, after the terminal obtains the touch operation performed by the user on the display interface of the weather application, the weather elements displayed on the weather application display interface are controlled to dynamically change, so as to realize the dynamic display effect of the weather elements on the weather application display interface based on the user's operation, and to realize the interactivity of displaying weather elements on the weather application display interface.

Preferably, the method for displaying weather elements involved in the above embodiments will be described in conjunction with practical applications below.

In an implementation, the weather element change rule can be set in advance, and the correspondence among the weather element, the touch operation, and the weather element change rule is set. After the touch operation performed by the user on the display interface of the weather application is detected by the terminal, the touch operation is identified, and the weather element that should be displayed on the weather application display interface is determined. The weather element, the touch operation, and the weather element change rule are called, the weather element change rule is determined, and then the corresponding weather element is dynamically displayed according to the touch operation.

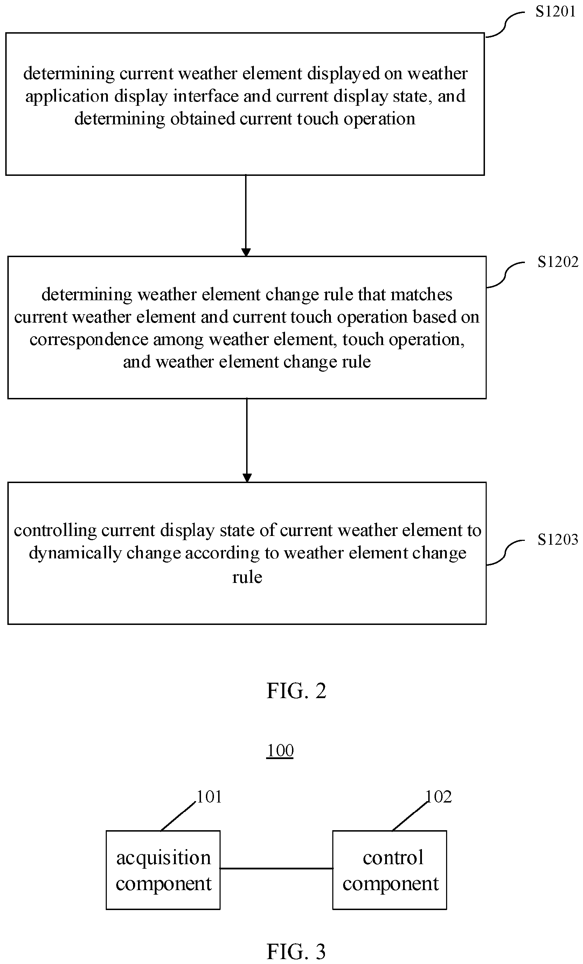

FIG. 2 shows an implementation flowchart for controlling a weather element displayed on the weather application display interface to dynamically change according to some embodiments of the present disclosure. Referring to FIG. 2, the method for controlling the weather elements displayed on the weather application display interface to dynamically change includes the following steps S1201 to S1203.

In step S1201, a current weather element displayed on the weather application display interface and a current display state are determined, and also the obtained current touch operation is determined.

Preferably, the determining of the current weather element displayed on the weather application display interface can be understood as determining the weather element that has been already displayed on the current display interface, and the weather element that will be displayed on the current display interface. The determining of the current display state of the current weather element displayed on the weather application display interface can include status information such as the position, angle, size, movement speed, color, transparency, shape, and the like of the weather element in a three-dimensional interactive interface.

In step S1202, a weather element change rule that matches the current weather element and the current touch operation is determined based on a correspondence among the weather element, the touch operation, and the weather element change rule.

Preferably, the weather elements include one or more of clouds, snow, rain, thunder, sunlight, and the like. The touch operation includes interactive touch operation performed by the user on the display interface of the weather application through the touch screen of the mobile device, and can include, for example, clicking, sliding, dragging, zooming, and the like. Of course, the interactive touch operation is not limited thereto, for example, it can also be gestures, eye tracking, or the like. The weather element change rule can be understood as a predetermined rule for controlling the display of the weather elements, such as rules of how to display the weather elements such as clouds, snow, rain, thunder, sunlight, and the like under specific conditions, and how to display their dynamic effects. For example, the weather element under the current weather status of a certain city is displayed, or, for example, the weather elements is displayed or hidden after a certain touch operation is detected, the dynamic effect of the displayed weather elements is changed, and the like. The dynamic change rules of the current weather element can be determined based on the correspondence among the weather element, the touch operation, and the weather element change rule, and the current weather element and the current display state of the current weather element.

In step 1203, the current display state of the current weather element is controlled to dynamically change according to the weather element change rule.

Preferably, different weather element change rules can be provided for different weather elements, thereby achieving different dynamic change effects of weather elements. The process of realizing different dynamic change effects of different weather elements will be described in conjunction with examples below.

Preferably, the current weather element includes a cloud element, and the current display state of the cloud element includes a cyclic displacement motion within a specified area of a three-dimensional space and an animation change inside the cloud element. The dynamic change inside the cloud element refers to the change of the internal structure of the cloud element, resulting in changes between divergence and convergence, and between being virtual and being real. The effect of displaying on the weather application display interface of the terminal can be that the cloud is moving in a cyclic motion, and there are animation changes inside the cloud itself (divergent and virtual changes). The current touch operation includes a first gesture operation, and the first gesture operation in this embodiment can include long-pressing the display interface, clicking the cloud element, and/or dragging the cloud element after clicking. The weather element change rule includes changing a movement speed of the cloud element and/or rotating a viewing angle of the cloud element. For example, when the first operation gesture is to click the cloud element, the movement speed is changed; and when the first operation gesture is to click and drag, the three-dimensional space of the cloud element is rotated, thereby changing the user's viewing angle.

The controlling the current display state of the current weather element to dynamically change according to the weather element change rule includes: on the weather application display interface, controlling the movement speed of the cloud element to slow down or speed up, and controlling global coordinates of the cloud element to rotate an angle in a three-dimensional space to match the first gesture operation based on the first gesture operation. Herein, the rotation angle of the viewing angle of the cloud element in the three-dimensional space is related to the finger movement distance and direction, and the like included in the first gesture operation. In this embodiment, when the cloud element is displayed on the weather application display interface, if the user performs a touch operation such as long-pressing and the like on the weather application display interface, the movement state of the cloud element will be slowing down or speeding up. If the user performs a sliding operation and the like on the weather application display interface, the user can rotate the viewing angle of the cloud element in a three-dimensional space based on the finger movement distance.

Preferably, the current weather element includes a snow element, and the current display state of the snow element includes moving in a vertical direction in a random area of a three-dimensional space and generating a direction deviation with a random wind speed. The current touch operation includes a second gesture operation. The weather element change rule includes changing a movement speed of the snow element and rotating a viewing angle of the snow element. When the current display status of the current weather element is controlled to dynamically change according to the weather element change rule, the movement speed of the snow element is controlled to slow down and global coordinates of the snow element are controlled to rotate an angle in the three-dimensional space to match the second gesture operation, on the weather application display interface.

It can be understood that the process of displaying dynamic changes of the snow element is similar to the process of displaying dynamic changes of the cloud element, which will not be described in detail here. It should be noted that the snow element moves vertically in a random area of the three-dimensional space from top to bottom, and different degrees of deviation occurs with the changes in the magnitude of the random wind speed. Preferably, the second gesture operation may use the same interaction mode as the first gesture operation, but the implementation object of the second gesture operation is snow, while the implementation object of the first gesture operation implementation object is cloud. In this embodiment, when the snow element is displayed on the weather application display interface, if the user performs a touch operation such as long-pressing and the like on the weather application display interface, the movement state of the snow element will slow down. If the user performs a sliding operation and the like on the weather application display interface, the user can rotate the viewing angle of the snow element in the three-dimensional space based on the finger movement distance.

Preferably, the current weather element includes a rain element, and the current display state of the rain element includes moving in a specified direction in a random area of the three-dimensional space and generating a direction deviation with a random wind speed, the specified direction is a direction with a certain inclination angle from the horizontal axis direction of the terminal, and the movement speed in the specified direction is determined based on the amount of rainfall. The current touch operation includes a third gesture operation. The weather element change rule includes changing a movement speed of the rain element and the display form of the rain element, and rotating a viewing angle of the rain element. When the current display state of the current weather element is controlled to dynamically change in accordance with the weather element change rule, on the weather application display interface, the movement speed of the rain element displayed in the form of rain filaments is controlled to slow down, the display form of the rain element is changed to a raindrop shape when the movement speed of the rain element falls within a specified threshold range, and global coordinates of the rain element are controlled to rotate an angle in the three-dimensional space to match the third gesture operation.

Preferably, the rain element moves in a specified direction in a random area of the three-dimensional space from top to bottom, and the degree of deviation varies with the magnitude of wind speed. The falling speed of the rain element is determined by the amount of rainfall in the weather information.

Herein, the weather information can be retrieved by the terminal from other devices, such as a cloud server and the like that can obtain weather status information, and can be rendered by a three-dimensional renderer in the form of data, and displayed on the display interface of the current weather application. Within a specified threshold range can be understood as a set threshold value, and when the movement speed of the rain element is greater than the threshold value, the rain element is displayed in the form of rain filaments; and when the movement speed of the rain element is less than the threshold value, the rain element is displayed in the form of raindrops.

Preferably, the meaning of the third gesture operation can refer to the understanding of the first gesture operation and the second gesture operation, and can also be understood based on the interaction mode in the art. In this embodiment, when the rain element is displayed on the weather application display interface, if the user performs a touch operation such as long-pressing and the like on the weather application display interface, the movement of the rain element slows down when the user presses, and the form of rain changes from rain filaments to raindrops when the movement speed drops to a certain range. If the user performs a sliding operation and the like on the weather application display interface, the user can rotate the viewing angle of the rain element in a three-dimensional space based on the finger movement distance.

Preferably, when a current weather element displayed on the weather application display interface includes a thunder element, a sound component of the terminal is called to play a sound effect and/or a vibration component of the terminal is called to vibrate. Preferably, when the weather information obtained by the terminal from the cloud server shows that the current weather state is the thunder, a random parameter will be enabled, and this random parameter represents one or more random moments, and at the one or more random moments, the three-dimensional display renderer of the thunder element and the sound component and/or the vibration component in the terminal are simultaneously called to display the thunder element, play sound effects and vibrate.

Preferably, the current weather element includes a sunlight element, and the current display state of the sunlight element includes displaying the sunlight element at a specified position of the three-dimensional space with a specified light intensity, and the current touch operation includes a fourth gesture operation; and the weather element change rule includes changing a display position and display intensity of the sunlight element. When the current display state of the current weather element is controlled to dynamically change in accordance with the weather element change rule, the sunlight element is displayed and the display position and display intensity of the sunlight element are controlled to dynamically change in response to obtaining the fourth gesture operation, on the weather application display interface.

Preferably, the meaning of the fourth gesture operation can refer to the understanding of the first gesture operation, the second gesture operation and the third gesture operation, and can also be understood based on the interaction mode in the art. In an example, the weather element change rule can be that the sunlight element can be displayed when the user clicks anywhere on the display interface of the weather application. The sunlight element can be hidden by deselecting. When the user clicks anywhere on the display interface of the weather application and drags, the display position and display intensity of the sunlight element will also dynamically change based on the drag angle and distance.

Preferably, if the display position of the sunlight element overlaps with display positions of other interface elements other than the sunlight element, the sunlight element is displayed in the form of reflective refraction at a display position. When the sunlight element, that is, its ray effect, overlaps with the positions of other interface elements, these interface elements at the overlapping position will be rendered with changes in color or transparency. Thus, in effect, it appears as reflective refraction. The interface elements in the embodiment include all weather elements displayed on the current interface and other pictures or text elements other than the weather elements.

In the process of implementing the dynamic change display of weather elements according to some embodiments of the disclosure, the weather elements need to be switched and displayed. For example, in the process of switching the weather information display in different cities, the displayed weather elements need to be switched and displayed. In the relate technologies, it is necessary to switch all the interface elements displayed before switching. In an implementation of the present disclosure, in the switching and displaying of the weather information, the switching and displaying of the weather information is realized based on the displaying and hiding of the weather elements.

Preferably, current weather data is acquired, and the switching and the display of the weather elements are controlled based on the current weather data. Herein, preferably, the weather element that matches the current weather data and needs to be displayed on the weather application display interface can be determined. Preferably, the weather elements that need to be displayed on the weather application display interface can be understood as the weather elements corresponding to the weather information acquired from the cloud server, which should be displayed in the current interface.

The weather element that is not displayed on the display interface of the weather application but exists in the current weather elements is displayed on the display interface of the weather application, and the weather element that is displayed on the display interface of the weather application but does not exist in the current weather elements is hidden on the display interface of the weather application. For convenience of description, the weather element that is not displayed on the display interface of the weather application but exists in the current weather elements is referred to as a first weather element, and the weather element that is displayed on the display interface of the weather application but does not exist in the current weather elements is referred to as a second weather element.

Preferably, the switching and displaying the weather state information based on the weather element is realized by displaying the first weather element and/or hiding the second weather element on the weather application display interface.

Preferably, the first weather element can be displayed and/or the second weather element can be hidden on the display interface of the weather application by adjusting a distance between a camera and the weather element in a three-dimensional space.

The camera in the three-dimensional space refers to a virtual camera in the three-dimensional space, which is used to capture the viewing angle of the stereoscopic image of the rendered three-dimensional space and display the same in a planar device. The virtual viewing angle can be adjusted by customizing the viewing angle through the system, or receiving the touch operation of zooming the interface by the user, or other feasible ways. Thus, the state of the first weather element and/or the second weather element is changed.

Based on the similar concept, some embodiments of the present disclosure also provide an apparatus for displaying weather elements.

It can be understood that, in order to implement the above functions, the apparatus for displaying weather elements provided by some embodiments of the present disclosure includes a corresponding hardware structure and/or software module for executing each function. With reference to the units and algorithm steps of the examples disclosed in various embodiments of the present disclosure, embodiments of the present disclosure can be implemented in the form of hardware or a combination of hardware and computer software. Whether a function is executed through the hardware or a manner of driving the hardware by the computer software depends on the specific application and design constraints of the technical solution. A person skilled in the art may use different methods to implement the described functions for each specific application, but such implementation should not be considered to go beyond the scope of the technical solutions of some embodiments of the present disclosure.

FIG. 3 is a block diagram illustrating an apparatus for displaying weather elements according to some embodiments. Referring to FIG. 3, an apparatus 100 for displaying weather elements is applied to a terminal on which a weather application is installed, and the apparatus 100 for displaying weather elements includes an acquisition unit 101 and a control unit 102. Herein, the acquisition unit 101 is configured to acquire a touch operation performed by a user on a display interface of the weather application. The control unit 102 is configured to control a weather element displayed on the weather application display interface to dynamically change in response to obtaining the touch operation.

Preferably, the control unit 102 controls the weather elements displayed on the weather application display interface to dynamically change in the following manner:
determining a current weather element displayed on the weather application display interface and a current display state, and determining the obtained current touch operation; determining a weather element change rule that matches the current weather element and the current touch operation based on a correspondence among the weather element, the touch operation, and the weather element change rule; and controlling the current display state of the current weather element to dynamically change in accordance with the weather element change rule.

Preferably, the current weather element includes a cloud element, and the current display state of the cloud element includes a cyclic displacement motion within a specified area of the three-dimensional space and an animation change inside the cloud element. The current touch operation includes a first gesture operation. The weather element change rule includes changing a movement speed of the cloud element and/or rotating a viewing angle of the cloud element. The control unit 102 controls the current display state of the current weather element to dynamically change in accordance with the weather element change rule in the following manner: controlling the movement speed of the cloud element to slow down or speed up, and controlling global coordinates of the cloud element to rotate an angle in a three-dimensional space to match the first gesture operation based on the first gesture operation, on the weather application display interface.

Preferably, the current weather element includes a snow element, and the current display state of the snow element includes moving in a vertical direction in a random area of the three-dimensional space and generating a direction deviation with a random wind speed. The current touch operation includes a second gesture operation. The weather element change rule includes changing a movement speed of the snow element and rotating a viewing angle of the snow element. The control unit 102 controls the current display state of the current weather element to dynamically change in accordance with the weather element change rule in the following manner: controlling the movement speed of the snow element to slow down, and controlling global coordinates of the snow element to rotate an angle in the three-dimensional space to match the second gesture operation, on the weather application display interface.

Preferably, the current weather element includes a rain element, and the current display state of the rain element includes moving in a specified direction in a random area of the three-dimensional space and generating a direction deviation with a random wind speed, the specified direction is a direction with a certain inclination angle from the horizontal axis direction of the terminal, and the movement speed in the specified direction is determined based on the amount of rainfall. The current touch operation includes a third gesture operation. The weather element change rule includes changing a movement speed of the rain element and the display form of the rain element, and rotating a viewing angle of the rain element. The control unit 102 controls the current display state of the current weather element to dynamically change in accordance with the weather element change rule in the following manner: controlling the movement speed of the rain element displayed in the form of rain filaments to slow down, changing the display form of the rain element to a raindrop shape when the movement speed of the rain element falls within a specified threshold range, and controlling global coordinates of the rain element to rotate an angle in the three-dimensional space to match the third gesture operation, on the weather application display interface.

Preferably, the control unit 102 is further configured to: call a sound component of the terminal to play a sound effect and/or call a vibration component of the terminal to vibrate, when a current weather element displayed on the weather application display interface includes a thunder element.

Preferably, the current weather element includes a sunlight element, and the current display state of the sunlight element includes displaying the sunlight element at a specified position in the three-dimensional space with a specified light intensity, and the current touch operation includes a fourth gesture operation. The weather element change rule includes changing a display position and display intensity of the sunlight element. The control unit 102 controls the current display state of the current weather element to dynamically change in accordance with the weather element change rule in the following manner: displaying the sunlight element and controlling the display position and display intensity of the sunlight element to dynamically change in response to obtaining the fourth gesture operation, on the weather application display interface.

Preferably, the control unit 102 is further configured to: display the sunlight element in the form of reflective refraction at a display position when the display position of the sunlight element overlaps with display positions of other interface elements other than the sunlight element.

Preferably, the acquisition unit 101 is further configured to acquire current weather data, and determine a weather element that matches the current weather data and needs to be displayed on the weather application display interface based on the current weather data. The control unit 102 is further configured to display a first weather element and/or hide a second weather element on the display interface of the weather application, the first weather element is a weather element that is not displayed on the display interface of the weather application but exists in the weather elements that need to be displayed, and the second weather element is a weather element that is displayed on the display interface of the weather application but does not exist in the weather elements that need to be displayed.

Preferably, the control unit 102 displays a first weather element and/or hides a second weather element on the display interface of the weather application in the following manner: displaying a first weather element and/or hiding a second weather element on the display interface of the weather application by adjusting a distance between a camera and the weather element in the three-dimensional space.

With respect to the apparatus in the above embodiments, the specific manners for performing operations for individual modules therein have been described in detail in the embodiments regarding the method, which will not be elaborated herein.

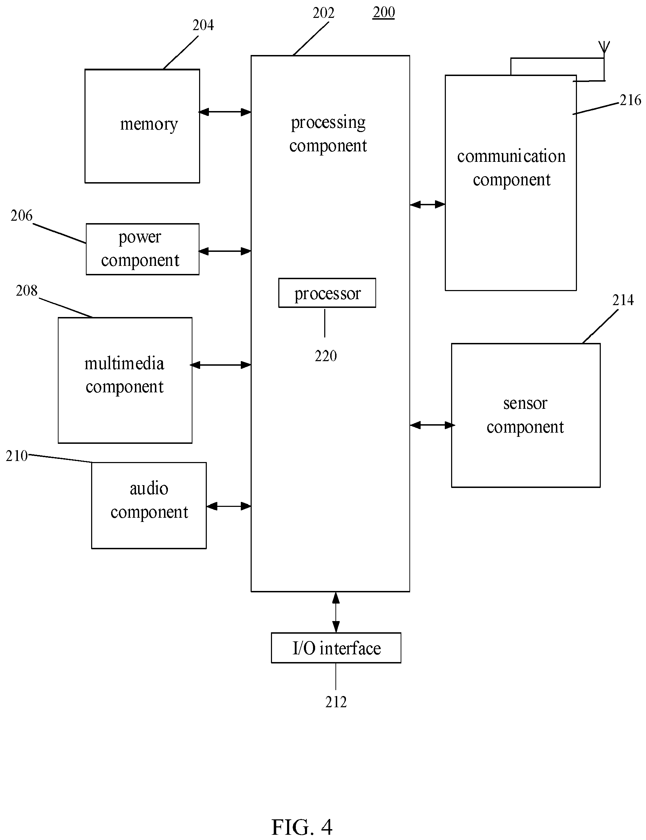

FIG. 4 is a block diagram illustrating a device 200 for displaying weather elements according to some embodiments. For example, the device 200 can be a mobile phone, a computer, a digital broadcast terminal, a messaging device, a gaming console, a tablet, a medical device, exercise equipment, a personal digital assistant, and the like.

Referring to FIG. 4, the device 200 may include one or more of the following components: a processing component 202, a memory 204, a power component 206, a multimedia component 208, an audio component 210, an input/output (I/O) interface 212, a sensor component 214, and a communication component 216.

The processing component 202 typically controls overall operations of the device 200, such as the operations associated with display, telephone calls, data communications, camera operations, and recording operations. The processing component 202 may include one or more processors 220 to execute instructions to implement all or part of the steps in the above described methods. Moreover, the processing component 202 may include one or more modules which facilitate the interaction between the processing component 202 and other components. For instance, the processing component 202 may include a multimedia module to facilitate the interaction between the multimedia component 208 and the processing component 202.

The memory 204 is configured to store various types of data to support the operation of the device 200. Examples of such data include instructions for any applications or methods operated on the device 200, contact data, phonebook data, messages, pictures, videos, etc. The memory 204 may be implemented by using any type of volatile or nonvolatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 206 supplies power to various components of the device 200. The power component 206 may include a power management system, one or more power sources, and any other components associated with the generation, management, and distribution of power in the device 200.

The multimedia component 208 includes a screen providing an output interface between the device 200 and a user. Preferably, the screen may include a liquid crystal display (LCD) and a touch panel (TP). Preferably, organic light-emitting diode (OLED) or other types displays can be adopted.

If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action.

Preferably, the multimedia component 208 includes a front camera and/or a rear camera. The front camera and/or the rear camera can receive external multimedia data while the device 200 is in an operation mode, such as a photographing mode or a video mode. Each of the front camera and the rear camera may be a fixed optical lens system or have focus and optical zoom capability.

The audio component 210 is configured to output and/or input audio signals. For example, the audio component 210 includes a microphone (MIC) configured to receive an external audio signal when the device 200 is in an operation mode, such as a call mode, a recording mode, and a voice recognition mode. The received audio signal can be further stored in the memory 204 or transmitted via the communication component 216. Preferably, the audio component 210 further includes a speaker to output audio signals.

The I/O interface 212 provides an interface between the processing component 202 and peripheral interface modules, such as a keyboard, a click wheel, buttons, and the like. The buttons may include, but are not limited to, a home button, a volume button, a starting button, and a locking button.

The sensor component 214 includes one or more sensors to provide status assessments of various aspects of the device 200. For instance, the sensor component 214 can detect an on/off status of the device 200, relative positioning of components, e.g., the display and a keypad, of the device 200, the sensor component 214 can also detect a change in position of the device 200 or one component of the device 200, a presence or absence of user contact with the device 200, an orientation or an acceleration/deceleration of the device 200, and a change in temperature of the device 200. The sensor component 214 may include a proximity sensor configured to detect the presence of nearby objects without any physical contact. The sensor component 214 may also include a light sensor, such as a CMOS or CCD image sensor, for use in imaging applications. Preferably, the sensor component 214 can also include an accelerometer sensor, a gyroscope sensor, a magnetic sensor, a pressure sensor, or a temperature sensor.

The communication component 216 is configured to facilitate wired or wireless communication between the device 200 and other devices. The device 200 can access a wireless network based on a communication standard, such as Wi-Fi, 2G, 3G, 4G, 5G, or a combination thereof. In one exemplary embodiment, the communication component 216 receives a broadcast signal or broadcast associated information from an external broadcast management system via a broadcast channel. In one exemplary embodiment, the communication component 216 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 204 including the instructions executable by the processor 220 in the device 200, for performing the above-described methods. For example, the non-transitory computer-readable storage medium can be a ROM, a random access memory (RAM), a CD-ROM, a magnetic tape, a floppy disc, an optical data storage device, and the like.

Various embodiments of the present disclosure can include one or more of the following advantages:
By controlling the weather elements displayed on the weather application display interface to dynamically change, when the touch operation performed by the user on the display interface of the weather application is obtained, it is realized that the weather elements on the weather application display interface change dynamically based on the user's operation, thereby realizing the interactivity of displaying the weather elements on the weather application display interface.

Preferably, the control and/or interface software or app can be provided in a form of a non-transitory computer-readable storage medium having instructions stored thereon is further provided. For example, the non-transitory computer-readable storage medium can be a ROM, a CD-ROM, a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more portions of computer program instructions, encoded on one or more computer storage medium for execution by, or to control the operation of, data processing apparatus.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures.

A computer program (also known as a program, software, software application, app, script, or code) can be written in any form of programming language, including compiled or interpreted languages, declarative or procedural languages, and it can be deployed in any form, including as a stand-alone program or as a portion, component, subroutine, object, or other portion suitable for use in a computing environment. A computer program can, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more portions, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors or processing circuits suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode), or any other monitor for displaying information to the user and a keyboard, a pointing device, e.g., a mouse, trackball, etc., or a touch screen, touch pad, etc., by which the user can provide input to the computer.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components.

The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

Various modifications of, and equivalent acts corresponding to, the disclosed aspects of the example embodiments, in addition to those described above, can be made by a person of ordinary skill in the art, having the benefit of the present disclosure, without departing from the scope of the disclosure defined in the following claims, the scope of which is to be accorded the broadest interpretation so as to encompass such modifications and equivalent structures.

Some other embodiments of the present disclosure can be available to those skilled in the art upon consideration of the specification and practice of the various embodiments disclosed herein. The present application is intended to cover any variations, uses, or adaptations of the present disclosure following general principles of the present disclosure and include the common general knowledge or conventional technical means in the art without departing from the present disclosure. The specification and examples can be shown as illustrative only, and the true scope of the disclosure is indicated by the following claims.

## Claims

1. A method for displaying weather elements, applied to a terminal, comprising:
acquiring (S11) a touch operation performed by a user on a display interface of a weather application; and
controlling (S12) a weather element displayed on the weather application display interface to dynamically change in response to the touch operation.

2. The method for displaying weather elements according to claim 1, wherein the controlling (S12) a weather element displayed on the weather application display interface to dynamically change comprises:
determining (S1201) a current weather element displayed on the weather application display interface and a current display state, and determining the obtained current touch operation;
determining (S1202) a weather element change rule that matches the current weather element and the current touch operation based on a correspondence among the weather element, the touch operation, and the weather element change rule; and
controlling (S1203) the current display state of the current weather elements to dynamically change in accordance with the weather element change rule.

3. The method for displaying weather elements according to claim 2, wherein the current weather element comprises a cloud element, and the current display state of the cloud element comprises being in a cyclic displacement motion within a specified area of the three-dimensional space and animation change inside the cloud element; the current touch operation comprises a first gesture operation; and the weather element change rule comprises changing a movement speed of the cloud element and/or rotating a viewing angle of the cloud element; and
the controlling (S1203) the current display state of the current weather element to dynamically change in accordance with the weather element change rule comprises:
controlling the movement speed of the cloud element to slow down or speed up, and controlling global coordinates of the cloud element to rotate an angle in the three-dimensional space to match the first gesture operation based on the first gesture operation, on the weather application display interface.

4. The method for displaying weather elements according to claim 2 or 3, wherein the current weather element comprises a snow element, and the current display state of the snow element comprises moving in a vertical direction in a random area of the three-dimensional space, and generating a direction deviation with a random wind speed; the current touch operation comprises a second gesture operation; and the weather element change rule comprises changing a movement speed of the snow element and rotating a viewing angle of the snow element; and
the controlling (S1203) the current display state of the current weather element to dynamically change in accordance with the weather element change rule comprises:
controlling the movement speed of the snow element to slow down, and controlling global coordinates of the snow element to rotate an angle in the three-dimensional space to match the second gesture operation, on the weather application display interface.

5. The method for displaying weather elements according to any of claims 2-4, wherein the current weather element comprises a rain element, and the current display state of the rain element comprises moving in a specified direction in a random area of the three-dimensional space, and generating a direction deviation with a random wind speed, the specified direction is a direction with a certain inclination angle from the horizontal axis direction of the terminal, and the movement speed in the specified direction is determined based on the amount of rainfall; the current touch operation comprises a third gesture operation; and the weather element change rule comprises changing a movement speed of the rain element and the display form of the rain element, and rotating a viewing angle of the rain element; and
the controlling (S1203) the current display state of the current weather element to dynamically change in accordance with the weather element change rule comprises:
controlling the movement speed of the rain element displayed in the form of rain filaments to slow down, changing the display form of the rain element to a raindrop shape when the movement speed of the rain element falls within a specified threshold range, and controlling global coordinates of the rain element to rotate an angle in the three-dimensional space to match the third gesture operation, on the weather application display interface.

6. The method for displaying weather elements according to any of claims 2-5, further comprising:
calling a sound component of the terminal to play a sound effect and/or calling a vibration component of the terminal to vibrate when the current weather element displayed on the weather application display interface comprises a thunder element.

7. The method for displaying weather elements according to any of claims 2-6, wherein the current weather element comprises a sunlight element, and the current display state of the sunlight element comprises displaying the sunlight element at a specified position in the three-dimensional space with a specified light intensity, and the current touch operation comprises a fourth gesture operation; and the weather element change rule comprises changing a display position and display intensity of the sunlight element; and
the controlling (S1203) the current display state of the current weather element to dynamically change in accordance with the weather element change rule comprises:
displaying the sunlight element and controlling the display position and display intensity of the sunlight element to dynamically change in response to obtaining the fourth gesture operation, on the weather application display interface.

8. The method for displaying weather elements according to claim 7, further comprising:
displaying the sunlight element in the form of reflective refraction at a display position when the display position of the sunlight element overlaps with display positions of other interface elements other than the sunlight element.

9. The method for displaying weather elements according to claim 8, further comprising:
acquiring current weather data, and determining a weather element that matches the current weather data and needs to be displayed on the weather application display interface based on the current weather data; and
displaying a first weather element and/or hiding a second weather element on the display interface of the weather application, the first weather element being a weather element that is not displayed on the display interface of the weather application but exists in the weather elements that need to be displayed, the second weather element being a weather element that has been displayed on the display interface of the weather application but does not exist in the weather elements that need to be displayed.

10. The method for displaying weather elements according to claim 9, wherein the displaying a first weather element and/or hiding a second weather element on the display interface of the weather application comprises:
displaying a first weather element and/or hiding a second weather element on the display interface of the weather application by adjusting a distance between a camera and the weather element in the three-dimensional space.

11. An apparatus for displaying weather elements, applied to a terminal on which a weather application is installed, comprising:
a processor; and
a storage for storing instructions executable by the processor,
wherein the processor is configured to execute the method for displaying weather elements according to any of claims 1 to 10.

12. A non-transitory computer-readable storage medium, having stored thereon instructions for execution by a processor of a mobile terminal, the mobile terminal is enabled to execute the method for displaying weather elements according to any of claims 1 to 10.

13. A mobile terminal implementing the method of any of claims 1-10, wherein the weather elements include a cloud element, a rain element, a snow element, a sunlight element, a thunder element, and the mobile terminal comprises:
a touch screen configured to:
receive the touch operation; and
display a first weather element among the weather elements and hide a second weather element among the weather elements on the display interface of the weather application by adjusting a distance between a virtual camera and the weather elements in a three-dimensional space;
a sound component configured to play a sound effect associated with the rain element; and
a vibration component configured to vibrate when the current weather element displayed on the weather application display interface comprises the thunder element;
wherein the mobile terminal is configured to:
control the weather elements displayed on the weather application display interface to dynamically change based on the touch operation, thereby realizing interactivity of displaying the weather elements on the weather application display interface;
construct the virtual camera in the three-dimensional space to capture from a viewing angle a stereoscopic image of rendered three-dimensional space and display the stereoscopic image in the touch screen; and
control a movement speed of the cloud element to slow down or speed up, and control global coordinates of the cloud element to rotate an angle in the three-dimensional space to match a first gesture operation based on the first gesture operation, on the weather application display interface;
control a movement speed of the snow element to slow down, and control global coordinates of the snow element to rotate an angle in the three-dimensional space to match a second gesture operation, on the weather application display interface;
control a movement speed of the rain element displayed in a form of rain filaments to slow down, change a display form of the rain element to a raindrop shape when the movement speed of the rain element falls within a specified threshold range, and control global coordinates of the rain element to rotate an angle in the three-dimensional space to match a third gesture operation, on the weather application display interface.
